# EUROPÄISCHE PATENTSCHRIFT

(11) **EP 3 969 148 B1**
(45) Veröffentlichungstag und Bekanntmachung des Hinweises auf die Patenterteilung: **22.11.2023**
(21) Anmeldenummer: 20718664.4
(22) Anmeldetag: 14.04.2020
(51) Int. Cl.: B01D 29/21, B01D 35/153

(54) **FILTEREINRICHTUNG ZUM REINIGEN EINES FLUIDES SOWIE FILTERELEMENT**
FILTER DEVICE FOR PURIFYING A FLUID, AND FILTER ELEMENT
DISPOSITIF DE FILTRAGE POUR LE NETTOYAGE D'UN FLUIDE AINSI QUE L'ÉLÉMENT FILTRANT

(30) Priorität: 14.05.2019 DE 102019206949
(43) Veröffentlichungstag der Anmeldung: 23.03.2022
(73) Patentinhaber: MAHLE International GmbH, 70376 Stuttgart (DE)
(72) Erfinder: PREIßINGER, Markus, 71229 Leonberg (DE); WIELER, Patrick, 73660 Urbach (DE)
(74) Vertreter: BRP Renaud & Partner mbB Rechtsanwälte Patentanwälte Steuerberater
(86) Internationale Anmeldenummer: PCT/EP2020/060380
(87) Internationale Veröffentlichungsnummer: WO 2020/229071

(56) Entgegenhaltungen:
- WO-A2-2018/134627
- DE-A1-102014 019 145
- US-A1- 2009 090 668

## Beschreibung

Die Erfindung betrifft eine Filtereinrichtung nach dem Oberbegriff des Anspruchs 1 und ein Filterelement, die jeweils zum Reinigen eines Fluides dienen.

Eine gattungsgemäße Filtereinrichtung ist beispielsweise aus WO 2018/134627 A2 bekannt. Weitere Filtereinrichtungen sind aus DE 10 2014 019145 A1 und US 2009/090668 A1 bekannt. Solche Filtereinrichtungen werden insbesondere im Bereich der Kraftfahrzeugtechnik und dort beispielsweise bei Klimaanlagen, Luftfiltern, Ölfiltern oder Kraftstofffiltern eingesetzt und dienen dazu, ein über einen Zuführkanal an die Filtereinrichtung herangeführtes Fluid zu filtrieren. Beim Fluid handelt es sich beispielsweise um Außenluft, Innenluft oder eine Kombination von Außen- und Innenluft oder um Kraftstoffe oder um Schmierstoffe. Durch die Filtration werden Partikel und/oder andere Substanzen aus dem Fluid herausgetrennt, so dass dieses sozusagen gereinigt ist.

Nach der Reinigung kann das Fluid, insbesondere mittels eines Abführkanals, in einen Innenraum eines Kraftfahrzeuges geleitet werden, wenn die Filtereinrichtung als Innenraumfiltereinrichtung konzipiert ist. Alternativ, wenn die Filtereinrichtung als Flüssigfiltereinrichtung, insbesondere als eine Ölfiltereinrichtung oder als eine Kraftstofffiltereinrichtung, ausgebildet ist, kann das gereinigte Fluid insbesondere an einer Arbeitsmaschine bereitgestellt werden, um diese beispielsweise mit Kraftstoff oder Schmiermittel zu versorgen.

In der Praxis lagern sich die aus dem Fluid herausgetrennten Partikel oder Substanzen, über die Zeit gesehen, an einem Filterelement der Filtereinrichtung an. Dabei bildet sich an dem Filterelement eine mehr oder weniger zusammenhängende Schmutzschicht, die aus den Partikeln oder Substanzen besteht. Die Schmutzschicht bedeckt das Filterelement und verschließt dieses praktisch vollständig, so dass die Filterleistung der Filtereinrichtung herabgesetzt ist.

Bei Filtereinrichtungen ist daher ein regelmäßiger Wechsel des Filterelements vorzunehmen, um eine einwandfreie Funktion zu gewährleisten. Zum Wechseln des Filterelements ist es üblich, das verschmutzte Alt-Filterelement von einem Filtergehäuse abzunehmen. Das verschmutzte Alt-Filterelement kann dann entweder aufbereitet und wiederverwertet oder durch ein Neu-Filterelement ersetzt werden.

Das Filterelement als solches kann einen Filterkörper und eine Filterzarge umfassen, wobei der Filterkörper beispielsweise eine oder zwei an einem Filtermedium angeordnete Endscheiben aufweisen kann. Exemplarisch handelt es sich bei dem Filterelement um ein Ringfilterelement.

Jedenfalls ist es beim Wechseln des Filterelements wünschenswert, wenn die sich auf dem Filterelement angesammelten Partikel oder Substanzen der Schmutzschicht nicht in den Zuführkanal oder den Abführkanal gelangen, weil dann die Gefahr besteht, dass nachfolgende Systemkomponenten verschmutzt werden.

Um das Eindringen von Schmutzstoffen beim Wechsel des Filterelements in den einen oder anderen Kanal zu verhindern, ist es üblich, beispielsweise den Zuführkanal oder den Abführkanal zu verschließen, beispielsweise mit einem Ventilglied, wie es insbesondere aus der Druckschrift EP 1 937 962 bekannt ist. Derartige Filtereinrichtungen sind allerdings aus konstruktiver Sicht relativ aufwendig.

Die Aufgabe der Erfindung liegt daher darin, eine verbesserte Filtereinrichtung bereitzustellen.

Bei der vorliegenden Erfindung wird diese Aufgabe insbesondere durch die Gegenstände der unabhängigen Ansprüche gelöst.

Vorteilhafte Ausführungsformen sind Gegenstand der abhängigen Ansprüche und der Beschreibung.

Der Grundgedanke der Erfindung liegt darin, eine Filtereinrichtung zum Reinigen eines Fluides mit einem Filterelement, mit einem Ventilglied und einer Betätigungsanordnung auszustatten, wobei das Ventilglied einen Zuführkanal oder einen Abführkanal selbsttätig verschließt, wenn das Filterelement von einem Filtergehäuse der Filtereinrichtung entfernt ist. Dagegen gibt das Ventilglied den Zuführkanal oder den Abführkanal frei, wenn das Filterelement am Filtergehäuse positioniert ist, weil dann die am Filterelement und am Ventilglied angeordnete Betätigungsanordnung für eine Betätigung des Ventilglieds sorgt.

Die Erfindung sieht hierzu eine Filtereinrichtung mit einem von Fluid durchströmbaren Filterelement und ein Filtergehäuse zum Aufnehmen des Filterelements vor.

Das Filterelement kann am Filtergehäuse angeordnet sein, wobei das Filterelement oder dessen Filterkörper insbesondere von außen nach innen oder umgekehrt von dem Fluid durchströmbar ist. Beispielsweise handelt es sich bei dem Fluid um Innenluft, Außenluft, eine Kombination von Außen- und Innenluft, Kraftstoff oder Schmierstoff.

Im Filtergehäuse ist ein Ventilglied angeordnet, dass zweckmäßigerweise relativ zum Filtergehäuse verschieblich, insbesondere gleitverschieblich oder verdrehbar ist. Im Rahmen einer Ventilgliedbewegung des Ventilglieds ist das am Filtergehäuse angeordnete Ventilglied zwischen einer Schließstellung und mindestens einer Offenstellung hin und her bewegbar. In der Schließstellung ist eine am Filtergehäuse angeordnete Überströmanordnung durch das Ventilglied, insbesondere fluiddicht und insbesondere vollständig, verschlossen, so dass durch das Filterelement kein Fluid strömen kann. In mindestens einer der Offenstellung ist die Überströmanordnung freigegeben, so dass das Filterelement von Fluid durchströmt ist, was auch als Betriebsstellung bezeichnet ist. Die Überströmanordnung kann beispielsweise einerseits mit einem Zuführkanal und andererseits, unter Zwischenschaltung des Filterelements zum Filtern des Fluides, mit einem Abführkanal verbunden sein. Jedenfalls ist mit der Anordnung des Ventilglieds am Filtergehäuse der Vorteil verbunden, dass das Filtergehäuse wahlweise von Fluid durchströmbar ist, nämlich indem das Ventilglied entweder in die Schließstellung oder in eine der Offenstellungen bewegt ist.

Die Filtereinrichtung verfügt ferner über die erwähnte Betätigungsanordnung zum Betätigen des Ventilglieds, wobei durch die Betätigungsanordnung das Ventilglied im Rahmen der vorstehend beschriebenen Ventilgliedbewegung wahlweise betätigbar ist. In einer bevorzugten Ausführungsform wird das Ventilglied durch den eingesetzten Filterkörper betätigt.

Die Betätigungseinrichtung weist eine an dem Ventilglied angeordnete Öffner-Anordnung und eine an dem Filterelement angeordnete Fortsatz-Anordnung auf. Zweckmäßigerweise wirkt die Fortsatz-Anordnung mit der Öffner-Anordnung in der Betriebsstellung oder wenn das Filterelement aus der Wechselstellung in die Betriebsstellung gebracht wird zusammen, insbesondere sind sie in gegenseitigen Eingriff bringbar, so dass das Ventilglied in eine der Offenstellungen gebracht werden kann. Anders ausgedrückt kann das Filterelement auf das Gehäuse aufgesetzt werden, wobei die am Filterelement angeordnete Fortsatz-Anordnung mit der am Ventilglied angeordneten Öffner-Anordnung zusammenwirkt, um das Ventilglied in eine Offenstellung zu bringen.

Das Filtergehäuse hat einen, insbesondere zylindrischen, Dom zum Aufnehmen des Filterelements und des Ventilglieds. Der Dom, der auch als Gehäusedom bezeichnet werden kann, durchsetzt dabei das Filterelement, insbesondere zentral, beispielsweise wie ein Dorn. Jedenfalls kann sich das Filterelement am Dom abstützen, insbesondere radial und axial bezüglich einer Domlängsachse. Es kann vorgesehen sein, dass der Dom ortsfest und/oder einstückig am Filtergehäuse angeordnet ist oder dass der Dom als lösbares Bauteil am Filtergehäuse angeordnet ist. Jedenfalls ist das Filterelement in der Betriebsstellung der Filtereinrichtung auf den Dom aufgesetzt, so dass der Dom das Filterelement durchsetzt.

Im Ergebnis ist somit eine Filtereinrichtung bereitgestellt, die mithilfe eines das Ventilglied betätigenden Filterelements wahlweise aktivierbar oder deaktivierbar ist. Das hat den Vorteil, dass praktisch keine Partikel oder Substanzen in den Zuführkanal oder den Abführkanal gelangen können. Damit ist gewährleistet, dass beispielsweise beim Wechsel des Filterelements kein ungereinigtes Fluid in den Abführkanal oder den Zuführkanal gelangt.

Nachfolgend sind bevorzugte Gestaltungen der Öffner-Anordnung beschrieben.

Die erfindungsgemäße Öffner-Anordnung weist einen oder mehrere, am Ventilglied angeordnete, insbesondere stiftartige, Öffner-Pins zum Betätigen des Ventilglieds auf. Weil das Ventilglied innerhalb des Doms oder des Domkörpers angeordnet ist, greifen die Öffner-Pins durch den Dom oder den Domkörper hindurch, um mit der an dem Filterelement angeordneten Fortsatz-Anordnung zusammenzuwirken. Hierzu ist vorgesehen, dass die Öffner-Pins jeweils durch eine den Dom/Domkörper bezüglich einer Domlängsachse in radialer Richtung durchsetzenden Pinkörperausnehmung durchgesteckt sind und über den Domkörper, insbesondere radial, vorstehen.

Zweckmäßigerweise können zwei zueinander am hohlzylindrischen Domkörper diametral gegenüberliegende Pinkörperausnehmungen vorgesehen sein, durch die jeweils ein Öffner-Pin hindurchragt. Die Pinkörperausnehmungen können eine Längsnut bilden, in der jeweils ein Öffner-Pin, exemplarisch in Richtung der Domlängsachse, verschiebbar ist. Die Pinkörperausnehmungen sind jeweils beispielsweise in der Art einer Längsnut gestaltet, wobei sie sich insbesondere entlang der Domlängsachse erstrecken.

Der Filterkörper verfügt zweckmäßigerweise jeweils an seinen axialen freien Enden über eine Endscheibe. An einer oder an allen Endscheiben kann eine Fortsatz-Anordnung angeordnet sein.

Nachfolgend sind bevorzugte Gestaltungen der eine Kodierungsfunktion bereitstellenden Führungs-Rast-Anordnung beschrieben.

An dem Filterelement und dem Filtergehäuse ist vorzugsweise eine Führungs-Rast-Anordnung vorgesehen, um das Filterelement am Filtergehäuse zu lagern und zu führen. Die Führungs-Rast-Anordnung stellt zudem eine Kodierungsfunktion bereit, die das Anordnen eines zugelassenen Filterelements am Filtergehäuse und das Betätigen des Ventilglieds ermöglicht und die das Anordnen eines nicht zugelassenen Filterelements am Filtergehäuse und das Betätigen des Ventilglieds durch das nicht zugelassene Filterelement sperrt. Mit anderen Worten: Mit der Kodierungsfunktion ist es beispielsweise möglich, das Anordnen von Filterelementen ohne Kodierungsfunktion oder das Anordnen von Filterelementen mit nicht passender Kodierungsfunktion zu sperren, so dass das Ventilglied nicht in die Offenstellung bewegt werden kann und die Filtereinrichtung daher nicht von Fluid durchströmbar ist.

Die Kodierungsfunktion wird realisiert, in dem die Führungs-Rast-Anordnung eine Rastaufnahme und eine damit zusammenwirkende Gegenrastaufnahme bereitstellt. Die Rastaufnahme und die Gegenrastaufnahme können in gegenseitigen Eingriff gebracht werden, um das Filterelement und das Filtergehäuse relativ zueinander zu führen und um das Ventilglied zu betätigen, beispielsweise, wenn die Gegenrastaufnahme die Fortsatzkörper bildet. Nicht mit der Rastaufnahme oder der Gegenrastaufnahme ausgestattete Filtereinrichtungen können die Kodierungsfunktion nicht realisieren.

In diesem Zusammenhang ist es bevorzugt, wenn das Filterelement einen von Fluid durchströmbaren Filterkörper und einen daran angeordneten, den Filterkörper bezüglich einer Filterkörperlängsachse des Filterkörpers radial innen abstützenden, Zargenkörper und/oder einen oder zwei Endscheiben aufweist.

Die vorstehend beschriebene Gegenrastaufnahme ist erfindungsgemäß am Filterelement angeordnet, obwohl sie auch am Filterkörper oder am Zargenkörper zum Führen des Filterelements angeordnet sein kann. Zweckmäßigerweise kann die Gegenrastaufnahme an einer Filterinnenfläche des Filterelements, des Filterkörpers oder an einer Zargenkörperinnenfläche des Zargenkörpers angeordnet sein. Nicht mit der Gegenrastaufnahme ausgestattete Filterelemente können die Kodierungsfunktion nicht realisieren, sie lassen sich also nicht auf dem Filtergehäuse anordnen.

Die Rastaufnahme ist zweckmäßigerweise an einer Außenmantelfläche eines das Filterelement aufnehmenden Domkörpers des Filtergehäuses angeordnet. Das hat beispielsweise den Vorteil, dass die Rastaufnahme und die Gegenrastaufnahme im Rahmen des Filterwechsels so in gegenseitigen Eingriff bringbar sind, dass das Filterelement sozusagen am Dom entlang aus der WechselsteIlung in die Betriebsstellung geführt werden kann, wodurch die Kodierungsfunktion erreicht wird.

Es ist zweckmäßig, wenn die Rastaufnahme einen oder mehrere an der Außenmantelfläche des Doms oder des Domkörpers angeordnete Rastkörper umfasst, die jeweils bezüglich der Domlängsachse des Domkörpers radial von der Außenmantelfläche abstehen.

Dabei können an der Außenmantelfläche zwei diametral zueinander angeordnete Rastkörper-Paare angeordnet sein, die jeweils zwei in Umfangsrichtung um die Domlängsachse herum zueinander beabstandete parallele, insbesondere längliche, Rastkörper aufweisen.

Die Rastkörper oder die Rastkörper-Paare haben den Vorteil, relativ leicht mit dem Gegenrastkörper in Eingriff gebracht werden zu können. Beispielsweise ist es dadurch möglich das Filterelement, bestehend aus dem Filterkörper und der Innenzarge, sozusagen von oben her axial auf den zylindrischen Dom aufzustecken, wobei die Rastkörper oder die Rastkörper-Paare mit den am Dom angeordneten Gegenrastkörper in Eingriff kommen, sodass das Filterelement bis zur endgültigen Betriebsstellung führbar ist. Das hat beispielsweise den Vorteil, dass sich das Filterelement selbsttätig am Dom zentriert, also in der Art einer Selbstzentrierung.

Die Gegenrastaufnahme weist erfindungsgemäß wenigstens eine Einlaufschräge oder eine Doppel-Einlaufschräge und wenigstens eine Rastkontur-Mimikauf.

Die Einlaufschräge wirkt dabei mit der Rastaufnahme zusammen, um das Filterelement relativ zum Domkörper und/oder zum Filtergehäuse zu führen und, insbesondere in einer Umfangsrichtung um die Domlängsachse herum, auszurichten. Die Rastkontur-Mimik wirkt ferner mit der Rastaufnahme zusammen, um das Filterelement an dem Dom und/oder dem Filtergehäuse radial und/oder axial und/oder in einer Umfangsrichtung um die Domlängsachse herum zu führen und zu lagern. Dadurch wird erreicht, dass die Einlaufschräge oder die Doppel-Einlaufschräge mit der Rastaufnahme zusammenwirkt, um das Filterelement relativ zum Domkörper und/oder zum Filtergehäuse zu führen und auszurichten und um die Kodierungsfunktion bereitzustellen.

Die Einlaufschräge oder die Doppel-Einlaufschräge sind zweckmäßigerweise am Filterelement nach innen hin orientiert, wobei sie jeweils exemplarisch eine Art Rampe bilden, die am Filterelement schräg verlaufen. Im Falle der Doppel-Einlaufschräge können am Filterelement zwei schräg verlaufende Rampen vorgesehen sein, die beispielsweise an der Innenfläche des Filterelements wie ein Trichter v-förmig aufeinander zu laufen. Grundsätzlich ist es natürlich möglich, eine oder mehrere Einlaufschrägen oder Doppel-Einlaufschrägen am Filterelement anzuordnen. Denkbar ist auch, dass man beispielsweise eine einzige Einlaufschräge und eine einzige Doppel-Einlaufschräge am Filterelement anordnet.

Jedenfalls kann die Einlaufschräge oder die Doppel-Einlaufschräge einen Vorsprung oder eine Rampe am Filterkörper oder am Zargenkörper bilden, der mit der Rastaufnahme in Eingriff bringbar ist. Es kann auch vorgesehen sein, dass die Einlaufschräge oder die Doppel-Einlaufschräge in die Rastkontur-Mimik münden, sodass die Einlaufschräge oder die Doppel-Einlaufschräge also mit der Rastkontur-Mimik verbunden sind und am Filterelement eine durchgängige, zweckmäßigerweise nach innen gerichtete Kontur, bilden. Jedenfalls kann die Rastaufnahme an den Vorsprüngen bzw. den Rampen entlang gleiten, wenn das Filterelement auf das Filtergehäuse gesetzt wird. Auch hierdurch wird erreicht, das sich das Filterelement selbsttätig am Dom zentriert oder positioniert, also in der Art einer Selbstzentrierung.

Erfindungsgemäß ist weiterhin vorgesehen, dass die Rastkontur-Mimik eine Fortsatz-Anordnung aufweist, die mit einer Öffner-Anordnung eines am Filtergehäuse gleitverschlieblich angeordneten Ventilglieds zusammenwirkt, um das Ventilglied in eine Betriebsstellung zu bringen.

Ferner können ein oder mehrere Rastkörper der Rastaufnahme in die Rastkontur-Mimik eingreifen, wobei die Rastkontur-Mimik die Fortsatzkörper der Fortsatz-Anordnung umfasst, wobei die Fortsatzkörper komplementär zu den Rastkörpern gestaltet ist, und wobei die im Eingriff befindliche Rastkontur-Mimik und Rastkörper eine Bewegung des Filterelements in einer Umfangsrichtung um die Domlängsachse herum sperren, so dass das Filterelement zu einer vorgegebenen oder vorgebaren Betriebsstellung führbar ist.

Exemplarisch ist in der Mitte der Rastkontur-Mimik mindestens ein Fortsatzkörper zum Betätigen des Ventils angeordnet. Exemplarisch bildet der Fortsatzkörper eine Erhöhung. Beispielsweise ist die Rastkontur-Mimik durch einen U-förmigen U-Vorsprung gebildet der am Filterelement nach innen hin orientiert ist, wobei exemplarisch ein Fortsatzkörper zum Betätigen des Ventils sozusagen mittig der beiden Schenkel des U-Vorsprungs angeordnet ist. Zwischen dem Fortsatzkörper und den Schenkeln des U-Vorsprungs sind freie Bereiche vorhanden, in die die Rastaufnahme beispielsweise formschlüssig eingreifen kann.

Nachfolgend sind bevorzugte Gestaltungen der Filtereinrichtung beschrieben.

Zweckmäßigerweise kann das Ventilglied verschieblich am Dom angeordnet sein, wobei der Dom wenigstens eine Überströmanordnung aufweist, durch die hindurch Fluid strömen kann. Beispielsweise strömt ein Fluid von einem Zuführkanal heran, durch die Überströmanordnung hindurch und zu einem Abführkanal. Die Überströmanordnung ist dabei von dem Ventilglied wahlweise verschließbar oder freigebar. Das Ventilglied kann zweckmäßigerweise von der Betätigungsanordnung betätigt werden. An dem Filtergehäuse oder dem Dom ist ferner eine Zuströmöffnung angeordnet. Beispielsweise ist ein Zuführkanal an der Zuströmöffnung des Doms oder des Filtergehäuses angeordnet. Die Anordnung des Ventilglieds im Dom bringt den Vorteil mit sich, dass die Überströmanordnung relativ leicht vom Ventilglied verschließbar oder freigebbar ist. Ferner hat dies den Vorteil, dass das Ventilglied aus konstruktiver Sicht relativ einfach am Dom geführt werden kann.

Um zu erreichen, dass das Ventilglied am Dom relativ leicht verschieblich ist, insbesondere gleitverschieblich, kann der Dom einen eine Domlängsachse definierenden Domkörper aufweisen, der eine Dom-Ausnehmung umfasst. Bei der Dom-Ausnehmung handelt es sich beispielsweise um eine den Dom vollständig durchsetzende Ausnehmung, wobei die Dom-Ausnehmung von einer Domkörperwandung des Domkörpers axial und/oder radial bezüglich der Domlängsachse begrenzt ist. Exemplarisch mündet die Dom-Ausnehmung an einer Seite des Doms oder des Filtergehäuses unter Ausbildung einer Zuströmöffnung aus, an die beispielsweise der Zuführkanal angeordnet werden kann. Die Dom-Ausnehmung geht weiterhin zweckmäßigerweise in die Überströmanordnung über, sodass sozusagen Fluid von der Zuströmöffnung her durch die Dom-Ausnehmung hindurch bis zur Überströmanordnung strömen kann. Ferner ist das Ventilglied innerhalb der Dom-Ausnehmung angeordnet, um im Rahmen der Ventilgliedbewegung in Richtung der Ventilgliedlängsachse die Überströmanordnung wahlweise freizugeben oder zu verschließen. Dies hat insgesamt den Vorteil, dass Fluid durch den Dom hindurch zum Filterelement strömen kann.

Zweckmäßigerweise sind die Ventilgliedlängsachse und die Domlängsachse parallel und/oder koaxial zueinander orientiert.

Vorzugsweise kann das Ventilglied an einer Innenmantelfläche der Dom-Ausnehmung rundum berührend anliegen. Das hat den Vorteil, dass das Ventilglied geführt von der Innenmantelfläche in der Dom-Ausnehmung im Rahmen der Ventilgliedbewegung bewegbar ist.

Insbesondere kann an einer Ventilgliedmantelfläche des Ventilglieds ein Dichtkörper angeordnet sein, mittels dem das Ventilglied an der Dom-Ausnehmung rundum berührend dichtend anliegt. Dadurch wird erreicht, dass das Ventilglied umfangsseitig relativ dicht, insbesondere vollständig fluiddicht, am Dom anliegt. Insbesondere können dadurch die Gleiteigenschaften des Ventilglieds verbessert werden, so dass das Ventilglied entlang der Ventilgliedlängsachse im Vergleich mit einem Ventilglied ohne Dichtung leichter bewegbar ist.

Zweckmäßigerweise kann die Überströmanordnung eine Überströmausnehmung umfassen, die die Domkörperwandung des Doms durchsetzt, insbesondere vollständig. Dabei sind wenigstens zwei Überströmöffnungen der Überströmausnehmung vorgesehen, von der jeweils eine in die Dom-Ausnehmung und die jeweils andere an einer Außenmantelfläche des Domkörpers münden. Dadurch wird erreicht, dass von der Dom-Ausnehmung heran strömendes Fluid sozusagen durch die Überströmausnehmung hindurch zum Filterelement strömen kann.

Zweckmäßigerweise durchsetzt die Überströmanordnung die Domkörperwandung bezüglich der Domlängsachse radial.

Ferner können am Domkörper zwei zueinander diametral angeordnete Überströmausnehmung vorgesehen sein, die jeweils die Domkörperwandung durchsetzen. Auf diese Weise sind am Domkörper zwei durchströmbare Ausnehmungen angeordnet, sodass insgesamt ein größeres Fluidvolumen durch den Dom hindurch zum Filterelement strömen kann.

Am Filtergehäuse oder am Domkörper ist vorzugsweise eine Federanordnung angeordnet, die sich am Ventilglied abstützt, um das Ventilglied in die Schließstellung vorzuspannen. Beispielsweise handelt es sich bei der Filteranordnung um eine als Spiralfeder gestaltete Druckfeder. Die Federanordnung bringt den Vorteil mit sich, dass das Ventilglied sozusagen selbsttätig in die Schließstellung vorgespannt ist, was man auch als "normally closed"-Stellung bezeichnen kann. Insbesondere kann dadurch erreicht werden, dass das Ventilglied in die Schließstellung bewegt ist, wenn die Betätigungsanordnung sozusagen deaktiviert ist und das Ventilglied nicht betätigt. Beispielsweise ist das der Fall, wenn die Filtereinrichtung in einer Wechselstellung ist, zum Beispiel um das Filterelement oder den Filterkörper zu wechseln.

Es ist möglich, dass der Dom bezüglich einer Domlängsachse einen, insbesondere durchgängig, runden oder ringförmigen oder vieleckigen Querschnitt aufweist. Das hat den Vorteil, dass der Dom beispielsweise im Rahmen eines Spritzgussverfahrens herstellbar ist, beispielsweise in einem Kunststoffspritzgussverfahren.

Jedenfalls kann der Domkörper eine zylindrische oder hohlzylindrische Gestalt aufweisen, wobei die jeweilige Grundfläche beispielsweise einen runden oder vieleckigen Querschnitt aufweist.

Zudem kann der Domkörper mehrteilig, insbesondere zweiteilig, ausgebildet sein. Beispielsweise weist der Domkörper einen Domkörperschafft und eine Domkörpereinlaufschräge auf. Die beiden Komponenten können beispielsweise axial aufeinander angeordnet sein, beispielsweise aufeinander gesteckt oder miteinander verschweißt oder verklebt sein. Jedenfalls kann es dadurch möglich sein, dass das Ventilglied im Rahmen der Montage zunächst in den Domkörperschafft eingesetzt oder angeordnet wird, sodass dann in einem darauffolgenden Arbeitsschritt, die Domkörpereinlaufschräge auf den Domkörperschafft gesetzt wird. Das hat den Vorteil, dass die Filtereinrichtung relativ kompakt und daher relativ kostengünstig herstellbar ist.

Weiterhin kann das Ventilglied einen Ventilgliedkörper aufweisen, der eine ihn vollständig durchsetzende Ventilausnehmung umfasst. Das hat den Vorteil, dass Fluid von beispielsweise einer Zuströmöffnung oder einem Zuströmkanal durch die Ventilausnehmung hindurch zu einer Überströmanordnung strömen kann.

Insbesondere kann das Ventilglied ein zylindrischer Hohlkörper mit runden, insbesondere ringförmigen, Querschnitt sein.

Ein weiterer Grundgedanke der Erfindung liegt darin, ein Filterelement zum Reinigen eines Fluides anzugeben. Das Filterelement umfasst hierzu die in der vorstehenden Beschreibung genannten erfindungsgemäßen Merkmale des Filterelements und weiterhin einen durchströmbaren Filterkörper zum Reinigen des Fluides und einem als Innenzarge ausgebildeten Zargenkörper. Der Zargenkörper kann dabei den Filterkörper radial von innen her stützen, so dass der Filterkörper im Betrieb beispielsweise relativ hohe Differenzdrücke ertragen kann.

Zweckmäßig ist dabei, dass das Ventilglied mittels einer am Zargenkörper oder einem weiteren Bauteil, insbesondere einer der Endscheiben des Filterkörpers, vorgesehenen Betätigungsanordnung zwischen einer eine Durchströmung des Filterelements verhindernden Schließstellung und wenigstens einer eine Durchströmung des Filterelements freigebenden Offenstellung hin und her bewegbar ist.

Im Betrieb des Filterelements ist vorgesehen, dass das aus dem Filterelement und dem Zargenkörper gebildete Filterkörper-Zargenkörper-Bauteil auf den Gehäusedom aufgesteckt ist, was auch als Betriebsstellung bezeichnet ist. Beispielsweise handelt es sich bei dem Filterkörper-Zargenkörper-Bauteil um einen Rund- oder Ringfilter, so dass der Gehäusedom sozusagen als zentrale Aufnahme dient, die das Filterkörper-Zargenkörper-Bauteil zentral durchsetzt. Jedenfalls ist das Ventilglied in der Betriebsstellung durch die am Zargenkörper angeordnete Betätigungsanordnung in wenigstens eine der Offenstellungen bewegt, so dass das Filterkörper-Zargenkörper-Bauteil von Fluid durchströmt ist.

In einer als Wechselstellung bezeichneten weiteren Stellung ist das Filterkörper-Zargenkörper-Bauteil vom Gehäusedom entfernt, beispielsweise um das Filterelement zu wechseln. Das Ventilglied ist in diesem Fall nicht durch die Betätigungsanordnung betätigt, so dass es die Schließstellung einnimmt. Das Filterkörper-Zargenkörper-Bauteil ist daher nicht von Fluid durchströmt.

Bevorzugt handelt es sich bei dem Filterelement und/oder dem Filterkörper um einen radial durchströmbaren Ringfilter. Insbesondere weist der Ringfilter einen im Querschnitt ringförmigen Filterkörper auf, der aus Filtermaterial besteht, das insbesondere gefaltet bzw. plissiert sein kann.

Zusammenfassend bleibt festzuhalten: Die vorliegende Erfindung betrifft eine Filtereinrichtung zum Reinigen eines Fluides mit einem Filterelement, mit einem Filtergehäuse zum Aufnehmen des Filterelements, mit einem verschiebbar im Filtergehäuse angeordneten und eine Ventilgliedlängsachse definierenden Ventilglied. Das Ventilglied ist im Rahmen einer Ventilgliedbewegung zwischen einer Schließstellung und mindestens einer Offenstellung hin und her bewegbar, wobei das Ventilglied mittels einer Betätigungsanordnung zwischen der Schließstellung und mindestens einer Offenstellung hin und her bewegbar ist. Dabei umfasst das Filtergehäuse einen Dom zum Aufnehmen des Filterelements und des Ventilglieds. Das Filterelement ist in der Betriebsstellung auf den Dom aufgesetzt, wobei die Betätigungseinrichtung, eine an dem Ventilglied angeordnete Öffner-Anordnung und eine an dem Filterelement angeordnete Fortsatz-Anordnung aufweist, wobei die Fortsatz-Anordnung mit der Öffner-Anordnung in der Betriebsstellung zusammenwirkt, um das Ventilglied in eine Offenstellung zu bringen. Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Schnittansicht einer Filtereinrichtung in einer Betriebsstellung,
- Fig. 2: in einer Schnittansicht die Filtereinrichtung gemäß Fig. 1 in einer Wechselstellung,
- Fig. 3: in einer Schnittansicht die Filtereinrichtung gemäß Fig. 1, jedoch ohne Filterelement,
- Fig. 4: eine perspektivische Schnittansicht eines Filterelements,
- Fig. 5: eine perspektivische Schnittansicht einer weiteren Filtereinrichtung,
- Fig. 6: in einer perspektivischen Ansicht die Filtereinrichtung gemäß Fig. 5,
- Fig. 7a, 7b: jeweils in einer perspektivischen Ansicht die Filtereinrichtung gemäß Fig. 5, wobei Fig. 7a eine Schließstellung und Fig. 7b eine Offenstellung eines Ventilglieds zeigt,
- Fig. 8a, 8b und 8c: jeweils in einer perspektivischen Ansicht die Filtereinrichtung gemäß Fig. 5.

In der Zeichnung ist eine insgesamt mit dem Bezugszeichen 10 bezeichnete Filtereinrichtung dargestellt, die ein Filterelement 20 und ein Filtergehäuse 30 aufweist. Derartige Filtereinrichtungen 10 werden insbesondere im Bereich der Kraftfahrzeugtechnik oder Klimatechnik dazu verwendet, um Fluid zu reinigen, insbesondere um Partikel und Substanzen aus dem Fluid herauszufiltern. Beim Fluid handelt es sich daher beispielsweise um Innenluft, Außenluft, eine Kombination von Innen-und Außenluft, Kraftstoffe oder Schmierstoffe, wie Öl.

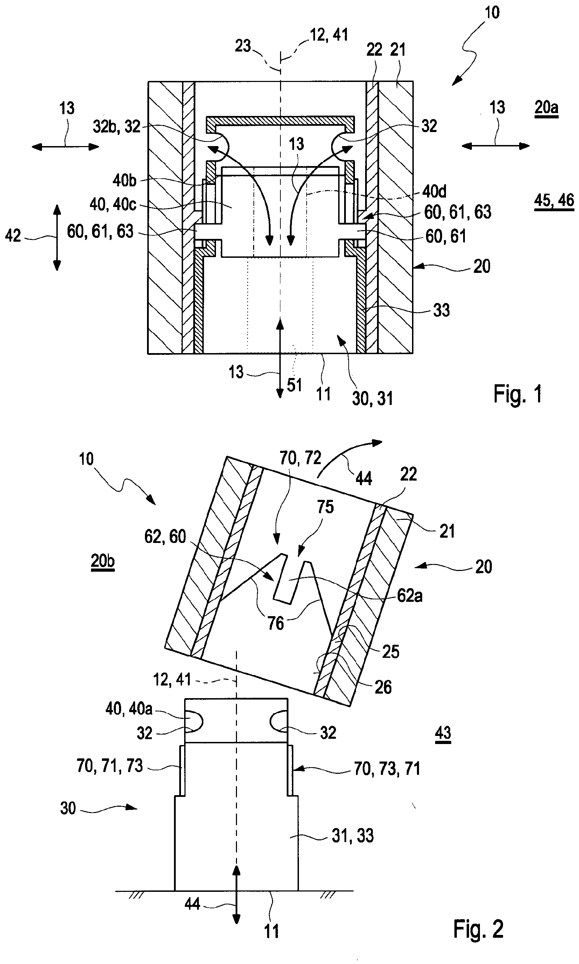

Die Filtereinrichtung 10 gemäß Fig. 1 und 2 verfügt über ein insgesamt mit dem Bezugszeichen 40 bezeichnetes Ventilglied, das im Filtergehäuse 30 in Richtung einer vom Filtergehäuse 30 definierten Domlängsachse 12 verschieblich angeordnet ist. Die Filtereinrichtung 10 umfasst ferner eine Betätigungsanordnung 60 zum Betätigen des Ventilglieds 40 und ein Filterelement 20. Beim Filterelement 20 handelt es sich insbesondere um eine integrale Baueinheit, die aus einem Zargenkörper 22 und einem eine Filterkörperlängsachse 23 definierende Filterkörper 21 besteht. Der Zargenkörper 22 ist dazu vorgesehen, den Filterkörper 21 zu stützen, wodurch beispielsweise erreicht wird, dass im Betrieb der Filtereinrichtung 10 relativ hohe Differenzdrücke realisierbar sind. Das Filterelement 20 ist beispielsweise von Fluid, insbesondere radial und/oder axial, durchströmbar und stellte die eigentliche Filter-Funktion der Filtereinrichtung 10 bereit.

Gemäß Fig. 1 und 2 ist der Zargenkörper 22 als eine Innenzarge ausgebildet, die den Filterkörper 21 von innen her stützt. Dies ist insbesondere dann sinnvoll, wenn das Filterelement 20 als Ring-Filter realisiert ist, so wie es in der Zeichnung gemäß Fig. 1 und 2 angedeutet ist. Gemäß Fig. 2 kann die Innenzarge lösbar oder unlösbar an einer Filterinnenfläche 25 des Filterkörpers 21 angeordnet sein, wobei ihre Zagenkörperinnenfläche 26 zur Domlängsachse 12 orientiert ist.

Das Filtergehäuse 30 dient zum Aufnehmen des Filterelements 20. Hierzu verfügt das Filtergehäuse 30 über einen sich entlang der Domlängsachse 12 erstreckenden Dom 31 mit einem Domkörper 33, siehe insb. Fig. 1 und 2. Dabei ist vorgesehen, dass das Filterelement 20 in einer in Fig. 1 zu erkennenden Betriebsstellung 20a der Filtereinrichtung 10 auf den Dom 31 aufgesetzt und/oder aufgesteckt ist, wobei der Dom 31 das Filterelement 20, insbesondere zentral, durchsetzen kann. Der Dom 31 oder der Domkörper 33 kann, insb. gemäß Fig. 1, 2 und 3, von zylindrischer Gestalt und insbesondere innen hohl gestaltet sein. Zweckmäßigerweise ist der Querschnitt, insbesondere bezogen auf die Domlängsachse 12 quer orientiert, rund, oval oder ringförmig gestaltet.

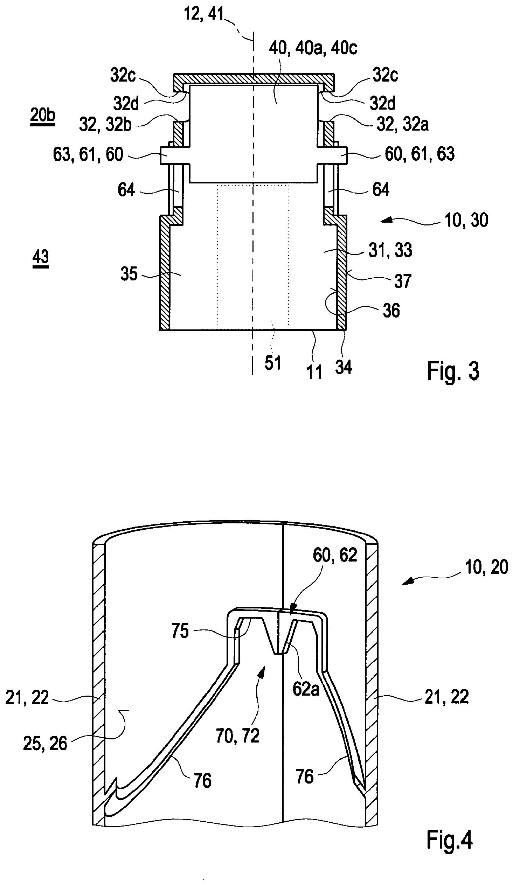

Das erwähnte Ventilglied 40 ist zweckmäßigerweise am Dom 31, vorzugsweise innerhalb des Domkörpers 33, verschieblich oder verschiebbar angeordnet, was in Fig. 1 durch eine Ventilgliedbewegung 42 angedeutet ist. Das Ventilglied 40 verfügt über einen mit dem Bezugszeichen 40c bezeichneten Ventilgliedkörper und eine den Ventilgliedkörper 40c, insbesondere vollständig, durchsetzende Ventilgliedausnehmung 40d, was in der Fig. 1 durch einen strichpunktierten Durchgang angedeutet ist. Durch die Ventilgliedausnehmung 40d kann zweckmäßigerweise Fluid strömen. Das Ventilglied 40, insbesondere der Ventilgliedkörper 40c, weist eine Ventilgliedmantelfläche 40a auf, siehe Fig. 3. An dem Ventilglied 40, insbesondere der Ventilgliedmantelfläche 40a, kann ein Dichtkörper 40b angeordnet sein kann, was exemplarisch in der Figur 1 durch einen O-Ring angedeutet ist. Das Ventilglied 40 definiert weiterhin eine Ventilgliedlängsachse 41, die im Betrieb der Filtereinrichtung 10 zweckmäßigerweise parallel zur Domlängsachse 12 orientiert ist. Das Ventilglied 40 ist weiterhin im Rahmen einer Ventilgliedbewegung, die in der Figur 1 durch einen mit Bezugszeichen 42 gekennzeichneten Doppelpfeil angedeutet ist, zwischen einer Schließstellung 43 (Fig. 2, 3) und mindestens einer Offenstellung 45, 46 (Fig. 1) hin und her bewegbar, insbesondere mittels der Betätigungsanordnung 60 betätigbar.

In der Schließstellung 43 gemäß Fig. 2 und 3 ist eine, insbesondere am Dom 31 angeordnete, Überströmanordnung 32 des Filtergehäuses 30 vom Ventilglied 40, insbesondere der Ventilgliedmantelfläche 40a, vollständig und zweckmäßigerweise fluiddicht verschlossen. Fluid kann dann nicht mehr durch das Filterelement 20 strömen.

In einer der Offenstellungen 45, 46 gemäß Fig. 1 ist die Überströmanordnung 32 nicht von dem Ventilglied 40, insbesondere nicht von der Ventilgliedmantelfläche 40a, vollständig verschlossen, sondern vorzugsweise teilweise oder vollständig freigegeben, so dass Fluid durch die Überströmanordnung 32 hindurch zum Filterelement 20 strömen kann, was der erwähnten Betriebsstellung 20a gemäß Fig. 1 entspricht. Man kann auch sagen, dass die Überströmanordnung 32 vom Ventilglied 40 verschließ- oder freigebbar ist, um wahlweise Fluid durch das Filterelement 20 strömen zu lassen.

Gemäß Fig. 1 und 2 kann am erwähnten Dom 31 eine Zuströmöffnung 11 und die Überströmanordnung 32 vorgesehen sein, so dass Fluid durch den Dom 31, insbesondere den Domkörper 33, strömen kann. Exemplarisch führt im Betrieb 20a der Filtereinrichtung 10 ein Fluidpfad 13, entlang dem Fluid strömt, von der Zuströmöffnung 11 durch den Dom 31, insbesondere durch den Domkörper 33, zur Überströmanordnung 32 oder umgekehrt. In der Fig. 1 ist der Fluidpfad 13 durch mehrere Doppelpfeile angedeutet.

Gemäß Fig. 3 ist eine Filtereinrichtung 10 mit einem Filtergehäuse 30 zu erkennen, wobei der Dom 31, insbesondere der Domkörper 33, eine zweckmäßigerweise zentrale Dom-Ausnehmung 35 aufweist. Die Dom-Ausnehmung 35 ist von einer Domkörperwandung 34 des Domkörpers 33 axial und/oder radial bezüglich der Domlängsachse 12 begrenzt und längs von Fluid durchströmbar, nämlich von der Zuströmöffnung 11 hin zur Überströmanordnung 32. Die Domkörperwandung 34 hat eine Innenmantelfläche 36 die radial nach innen zur Domlängsachse 12 orientiert ist und eine Außenwand 37, die radial nach außen von der Domlängsachse 12 weg orientiert ist. Zweckmäßigerweise kann das Ventilglied 40 innerhalb der Dom-Ausnehmung 35 angeordnet sein und an der Innenmantelfläche 36 berührend anliegen.

Die in Fig. 3 dargestellte Überströmanordnung 32 weist mindestens eine einzige oder mehrere mit denen Bezugszeichen 32a, 32b bezeichnete Überströmausnehmungen auf, die jeweils die Domkörperwandung 34 durchsetzen. Jede Überströmausnehmung 32a, 32b weist wenigstens zwei Überströmöffnungen auf, die exemplarisch mit den Bezugszeichen 32c, 32d bezeichnet sind. Die Überströmöffnungen 32c, 32d münden einerseits an der Außenwand 37 des Domkörpers 33 und andererseits an der Innenmantelfläche 36 der Dom-Ausnehmung 35 aus. Die Überströmausnehmungen 32a, 32b gemäß der Fig. 3 sind exemplarisch diametral zueinander angeordnet.

Jedenfalls kann die Filtereinrichtung 10 weiterhin eine Federanordnung 51 aufweisen, die sich einerseits am Filtergehäuse 30 und/oder am Domkörper 33 und andererseits am Ventilglied 40 abstützt, siehe die Fig. 1 und 3. Dadurch wird das Ventilglied 40 in die Schließstellung 43 elastisch vorgespannt. Das Ventilglied 40 nimmt daher stets selbsttätig die in Fig. 2 zu erkennende Schließstellung 43 ein. Die Federanordnung 51 ist in den Fig. 1 bis 3 exemplarisch als Druckfeder vorgesehen und durch ein punktiertes Rechteck dargestellt.

Gemäß Fig. 2 kann die Filtereinrichtung 10 eine Führungs-Rast-Anordnung 70 aufweisen, die am Filterelement 20 und am Filtergehäuse 30 angeordnet ist. Die Führungs-Rast-Anordnung 70 hat den Zweck, das Filterelement 20 am Filtergehäuse 30, insbesondere am Dom 31, zu lagern und das Filterelement 20 im Rahmen einer mit Pfeilen angedeuteten Filtermontagebewegung 44 zwischen der Betriebsstellung 20a gemäß Fig. 1 und einer davon entfernten Wechselstellung 20b gemäß Fig. 2 zu führen. In Fig. 2 und Fig. 3 ist angedeutet, dass das Ventilglied 40 in Rahmen der Wechselstellung 20b die Schließstellung 43 einnimmt, sobald das Filterelement 20 vom Dom 31 entfernt ist, so dass kein Fluid über die Überströmanordnung 32, beispielsweise in die Umwelt, strömen kann.

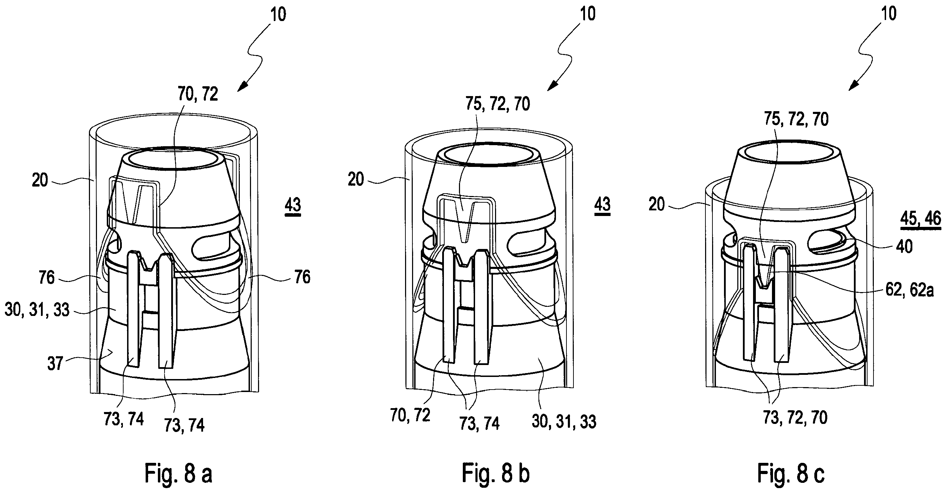

Die Führungs-Rast-Anordnung 70 verfügt zweckmäßigerweise über eine Rastaufnahme 71 und eine damit zusammenwirkende Gegenrastaufnahme 72. Die Rastaufnahme 71 und die Gegenrastaufnahme 72 sind in gegenseitigen Eingriff bringbar, was beispielsweise in Fig. 8a bis 8c angedeutet ist. Dadurch wird erreicht, dass das Filterelement 20 entlang des Doms 31, sozusagen von der Schließstellung 43 in einer der Offenstellungen 45, 46 geführt werden kann. Man kann auch sagen, dass das Filterelement 20 an dem Filtergehäuse 30 geführt und/oder gelagert wird.

Die Gegenrastaufnahme 72 kann an dem Zargenkörper 22, insbesondere an der Innenzarge, oder an dem Filterkörper 21 angeordnet sein, was in Fig. 2 sowie den Fig. 8a bis 8c zu erkennen ist. Die Gegenrastaufnahme 72 ist dabei zweckmäßigerweise an der Filterinnenfläche 25 des Filterkörpers 21 und/oder an der Zagenkörperinnenfläche 26 angeordnet. Dabei verfügt sie exemplarisch über eine Einlaufschräg oder über eine in Fig. 2, 4 angedeutete Doppel-Einlaufschräge 76 und eine, insbesondere sich daran anschließende, Rastkontur 75, die ebenfalls in Fig. 2 und 4 angedeutet ist. Die Rastkontur 75 kann man auch als Rastkontur-Mimik 75 bezeichnen.

Die Rastaufnahme 71 ist zweckmäßigerweise an der Außenmantelfläche 37 des Domkörpers 33 angeordnet und verfügt insbesondere über Rastkörper 73, die sozusagen mit Abstand in Umfangsrichtung zueinander an der Außenwand 37 des Domkörpers 33 angeordnet sind. Praktischerweise bilden zwei Rastkörper 73 ein Rastkörper-Paar 74, wie in der Fig. 8a, 8b und 8c zu erkennen ist. Die Rastkörper 73 der Rastaufnahme 71 sind beispielsweise auch in der Fig. 2 zu erkennen.

Gemäß Fig. 1 und 3 ist zu erkennen, dass an dem Ventilglied 40 eine Öffner-Anordnung 61 der Betätigungseinrichtung 60 angeordnet ist, wobei die Öffner-Anordnung 61 Öffner-Pins 63 umfasst. An dem Filterelement 20 kann eine damit kooperierende Fortsatz-Anordnung 62 der Betätigungseinrichtung 60 angeordnet sein, die in Fig. 2 zu erkennen ist, wobei die Fortsatz-Anordnung 62 exemplarisch einen stiftartigen Fortsatzkörper 62a umfasst. Jedenfalls kann die Öffner-Anordnung 61 und die Fortsatz-Anordnung 62 zusammenwirken, insbesondere dann wenn das Filterelement 20 in der Betriebsstellung 20a angeordnet ist, um das Ventilglied 40 in eine Offenstellung 45, 46 zu bewegen.

Die Öffner-Pins 63 sind in eine am Domkörper 33 angeordnete Pinkörperausnehmung 64 gesteckt, so dass sie über die Außenmantelfläche 37 des Domkörpers 33 ragen, siehe Fig. 3. An den über die Außenmantelfläche 37 des Domkörpers 33 vorstehenden Öffner-Pins 63 können der Fortsatz-Anordnung 62 angreifen, um das Ventilglied 40 im Rahmen der Ventilgliedbewegung 42 zu betätigen.

In der Fig. 4 ist insgesamt eine perspektivische Schnittansicht eines Filterelements 20 einer Filtereinrichtung 10 dargestellt, wobei eine Filterinnenfläche 25 des Filterkörpers 21 zu erkennen ist. Alternativ kann es sich beispielsweise anstelle des Filterelements 20 auch um einen Zargenkörper 22 und eine Zargenkörperinnenfläche 26 handeln. Jedenfalls ist an der Filterinnenfläche 25 oder der Zargenkörperinnenfläche 26 eine Gegenrastaufnahme 72 der Führungs-Rast-Anordnung 70 angeordnet, wobei die Gegenrastaufnahme 72 über Doppel-Einlaufschrägen 76 und eine diese miteinander verbindende Rastkontur 75 umfasst. Im Bereich der Rastkontur 75 ist ferner eine Fortsatz-Anordnung 62 der Betätigungseinrichtung 60 angeordnet, die einen exemplarisch stiftartigen Fortsatzkörper 62a hat, der beispielsweise an der Filterinnenfläche 25 oder der Zargenkörperinnenfläche 26 angeformt ist und über diese in Richtung der hier nicht dargestellten Domlängsachse 12 ragt. Die Rastkontur 75 bildet exemplarisch zwei taschenartige Vertiefungen um den Fortsatzkörper 62a aus.

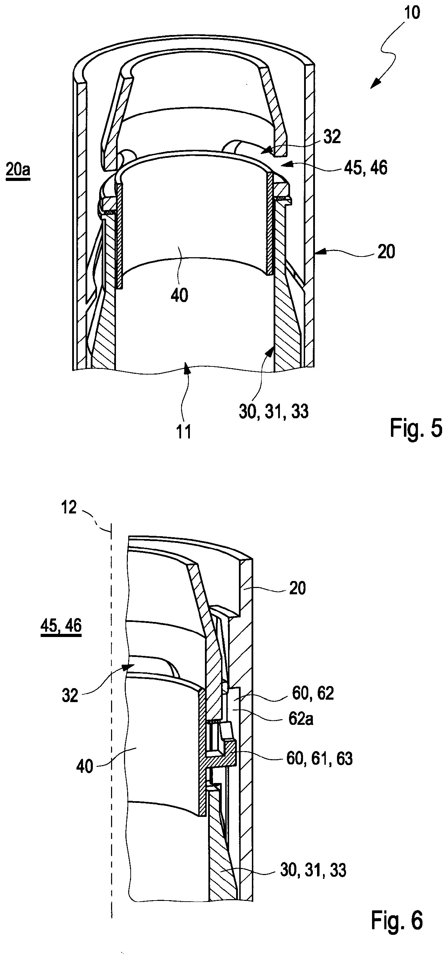

Die in Fig. 5 dargestellte perspektivische Schnittansicht der Filtereinrichtung 10 zeigt die Betriebsstellung 20a, in der das dortige Ventilglied 40 eine Offenstellung 45, 46 einnimmt, so dass die Überströmanordnung 32 des Filtergehäuses 30 von der Zuströmöffnung 11 durch den Dom 31, insbesondere durch den Domkörper 33, her zum Filterelement 20 von Fluid durchströmt werden kann.

Auch in der Fig. 6 ist eine perspektivische Ansicht die eine Offenstellung 45, 46 einnehmende Filtereinrichtung 10 mit Filterelement 20 zu erkennen, wobei im Unterschied zu Fig. 5 nun der Schnitt um 90° versetzt ausgeführt ist, so dass die in Fig. 5 nicht sichtbaren Öffner-Pins 63 der Öffner-Anordnung 61 der Betätigungseinrichtung 60 sowie die Fortsatz-Anordnung 62 der Betätigungseinrichtung 60 zu erkennen sind. Der Schnitt in Fig. 6 ist so ausgeführt, dass man erkennen kann, wie der Fortsatzkörper 62a der Fortsatz-Anordnung 62 mit einem Öffner-Pin 63 zusammenwirkt, nämlich indem der Fortsatzkörper 62a in eine in Richtung der Domlängsachse 12 im Öffner-Pin 63 ausgeführte, insbesondere spitz zusammenlaufende, Ausnehmung eintaucht. Die Öffner-Pins 63 wieder so am Ventilglied 40 angeordnet, dass sie radial weg von der Domlängsachse 12 über das Filtergehäuse 30, insbesondere den Dom 31 oder den Domkörper 33, abstehen. Dabei greift jeder Öffner-Pin 63 durch eine Pinkörperausnehmung 64, die den Domkörper 33 vollständig durchsetzt, beispielweise wie ein Schlitz. Die Überströmanordnung 32 ist beispielsweise als Taschenausnehmung ausgeführt.

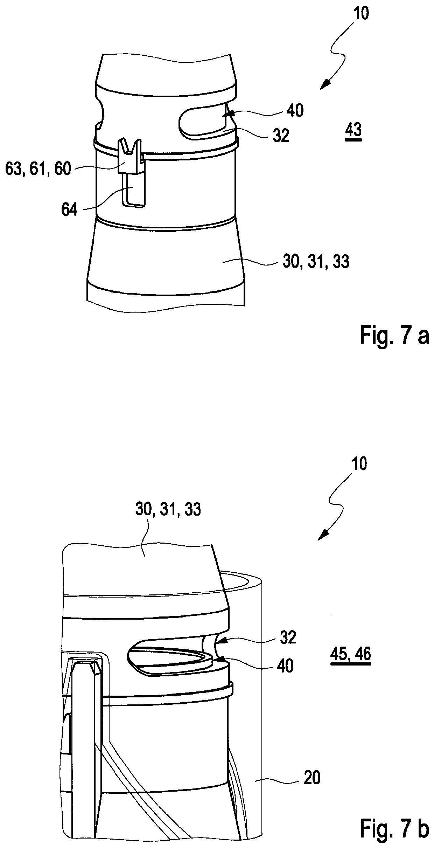

Die Fig. 7a und 7b zeigen jeweils in einer perspektivischen Ansicht die Filtereinrichtung 10 gemäß Fig. 5, wobei Fig. 7a die Schließstellung 43 (ohne Filterelement 20) und Fig. 7b eine Offenstellung 45, 46 (mit Filterelement 20) des Ventilglieds 40 zeigt. Gemäß Fig. 7a ist zu erkennen, wie die Öffner-Pins 63 der Öffner-Anordnung 61 der Betätigungseinrichtung 60 radial durch eine schlitzartige Pinkörperausnehmung 64 ragt, die am Filtergehäuse 30, insbesondere am Dom 31 oder am Domkörper 33 angeordnet ist. Gemäß Fig. 7b ist zu erkennen, wie das aufgesetzte Filterelement 20 mit den Öffner-Pins 63 der Öffner-Anordnung 61 zusammenwirkt, um das Ventilglied 40 in die Offenstellung 45, 46 zu bringen. In Fig. 7a und 7b ist jeweils eine Überströmanordnung 32 dargestellt, die aus zueinander diametral am Dom 31 oder am Domkörper 33 angeordneten Ausbrechungen besteht.

Zuletzt zeigen Fig. 8a, 8b jeweils in einer perspektivischen Ansicht die Filtereinrichtung 10 gemäß Fig. 5 in einer Schließstellung 43. Die Fig. 8c zeigt in einer perspektivischen Ansicht die Filtereinrichtung 10 gemäß Fig. 5, allerdings in einer der Offenstellungen 45, 46. Gemäß Fig. 8a ist ein angedeutetes Filterelement 20 zu erkennen, das über das Filtergehäuse 30, insbesondere den Dom 31 oder den Domkörper 33, gestülpt ist. Zu erkennen ist ferner, dass eine Gegenrastaufnahme 72 der Führungs-Rast-Anordnung 70 des Filterelements 20 eine Doppel-Einlaufschrägen 76 hat, die an einem an der Außenmantelfläche 37 des Doms 31 oder des Domkörpers 33 angeordneten Rastkörper 73 abgeleitet bzw. geführt ist. Die Rastkörper 73 sind bevorzugt paarweise als Rastkörper-Paar 74 ausgebildet. Gemäß Fig. 8b ist das Filterelement 20 zu erkennen, das über das Filtergehäuse 30, insbesondere den Dom 31 oder den Domkörper 33, gestülpt ist, wobei die Rastkörper 73 entlang der Doppel-Einlaufschrägen 76 in Richtung einer Rastkontur 75 der Gegenrastaufnahme 72 der Führungs-Rast-Anordnung 70 gerutscht ist, so dass die Rastkörper 73 beinahe in die Rastkontur 75 eintauchen können. Gemäß Fig. 8c ist zu erkennen, dass die Rastkörper 73 der Gegenrastaufnahme 72 der Führungs-Rast-Anordnung 70 in die Rastkontur 75 eingetaucht sind, so dass eine Fortsatz-Anordnung 62 der Rastkontur 75 mit einem Öffner-Pin 63 zusammenwirken kann, um das Ventilglied 40 in eine Offenstellungen 45, 46 zu bringen. Die Rastkontur 75 bildet exemplarisch zwei taschenartige Vertiefungen um die Fortsatz-Anordnung 62 aus, wobei es sich bei der Fortsatz-Anordnung 62 exemplarisch um einen stiftartigen Fortsatzkörper 62a handelt.

## Patentansprüche

1. Filtereinrichtung (10) zum Reinigen eines Fluides,
- mit einem von Fluid durchströmbaren Filterelement (20),
- mit einem Filtergehäuse (30) zum Aufnehmen des Filterelements (20),
- mit einem verschiebbar im Filtergehäuse (30) angeordneten und eine Ventilgliedlängsachse (41) definierenden Ventilglied (40), das im Rahmen einer Ventilgliedbewegung (42) zwischen einer eine Überströmanordnung (32) des Filtergehäuses (30) verschließenden Schließstellung (43), in der Fluid nicht durch das Filterelement (20) strömen kann, und mindestens einer die Überströmanordnung (32) freigegeben Offenstellung (45, 46), in der das Filterelement (20) in einer Betriebsstellung (20a) und von Fluid durchströmt ist, hin und her bewegbar ist, wobei das Filtergehäuse (30) einen Dom (31) zum Aufnehmen des Filterelements (20) und des Ventilglieds (40) umfasst, wobei das Filterelement (20) in der Betriebsstellung (20a) auf den Dom (31) aufgesetzt ist,
- mit einer Betätigungsanordnung (60) zum Betätigen des Ventilglieds (40) im Rahmen der Ventilgliedbewegung (42), wobei die Betätigungseinrichtung (60) eine an dem Ventilglied (40) angeordnete Öffner-Anordnung (61) und eine an dem Filterelement (20) angeordnete Fortsatz-Anordnung (62) aufweist und die Fortsatz-Anordnung (62) mit der Öffner-Anordnung (61) in der Betriebsstellung (20a) zusammenwirkt, um das Ventilglied (40) in eine Offenstellung (45, 46) zu bringen,
- wobei die Öffner-Anordnung (61) einen oder mehrere jeweils am Ventilglied (40) angeordnete Öffner-Pins (63) zum Betätigen des Ventilglieds (40) umfasst, **dadurch gekennzeichnet, dass**
- die Öffner-Pins (63) jeweils durch eine Pinkörperausnehmung (64) durchgesteckt sind und seitlich über den Dom (31) vorstehen, wobei die Pinkörperausnehmungen (64) am Dom (31) angeordnet sind und den Dom (31) jeweils quer bezüglich einer Domlängsachse (12) durchsetzen.

2. Filtereinrichtung (10) nach Anspruch 1,
**dadurch gekennzeichnet,**
- **dass** die Öffner-Pins (63) in der Betriebsstellung (20a) mit am Filterelement (20) angeordneten Fortsatzkörpern (62a) der Fortsatz-Anordnung (62) im Eingriff stehen, um das Ventilglied (40) im Rahmen der Ventilgliedbewegung (42) zu betätigen.

3. Filtereinrichtung (10) nach Anspruch 1 oder 2,
**dadurch gekennzeichnet,**
- **dass** an dem Filterelement (20) und dem Filtergehäuse (30), insbesondere an dem Dom (31), eine Führungs-Rast-Anordnung (70) zum Bereitstellen einer Kodierungsfunktion vorgesehen ist, die das Anordnen eines Filterelements (20) am Filtergehäuse (30) und das Betätigen des Ventilglieds (40) wahlweise ermöglicht oder sperrt.

4. Filtereinrichtung (10) nach Anspruch 3,
**dadurch gekennzeichnet,**
- **dass** die Führungs-Rast-Anordnung (70) eine Rastaufnahme (71) und eine Gegenrastaufnahme (72) aufweist, die in gegenseitigen Eingriff bringbar sind, um das Filterelement (20) und das Filtergehäuse (30) relativ zueinander zu führen und um das Ventilglied (40) zu betätigen.

5. Filtereinrichtung (10) nach Anspruch 4,
**dadurch gekennzeichnet,**
- **dass** die Rastaufnahme (71) an einer Außenmantelfläche (37) eines das Filterelement (20) aufnehmenden Domkörpers (33) des Doms (31) des Filtergehäuses (30) angeordnet ist.

6. Filtereinrichtung (10) nach einem der Ansprüche 4 oder 5,
**dadurch gekennzeichnet,**
- **dass** die Rastaufnahme (71) einen oder mehrere an der Außenmantelfläche (37) des Doms (31) angeordnete Rastkörper (73) umfasst, die bezüglich einer Domlängsachse (12) des Doms (31) radial von der Außenmantelfläche (37) abstehen.

7. Filtereinrichtung (10) nach einem der Ansprüche 4 bis 6,
**dadurch gekennzeichnet,**
- **dass** an der Außenmantelfläche (37) zwei diametral zueinander angeordnete Rastkörper-Paare (74) angeordnet sind, die jeweils zwei in Umfangsrichtung um die Domlängsachse (12) herum zueinander beabstandete bezüglich der Domlängsachse (12) parallel verlaufende Rastkörper (73) aufweisen und/oder
- **dass** eine Pinkörperausnehmung (64) zum Durchstecken eines Öffner-Pins (63) der Öffner-Anordnung (61) zwischen zwei Rastkörpern (73) angeordnet ist.

8. Filtereinrichtung (10) nach einem der Ansprüche 4 bis 7,
**dadurch gekennzeichnet,**
- **dass** das Filterelement (20) einen vom Fluid durchströmbaren Filterkörper (21) und einen daran angeordneten, den Filterkörper (21) bezüglich einer Filterkörperlängsachse (23) des Filterkörpers (21) radial innen abstützenden Zargenkörper (22) aufweist, wobei am Filterkörper (21) oder am Zargenkörper (22) die mit der Rastaufnahme (71) des Filtergehäuses (30) zusammenwirkende Gegenrastaufnahme (72) zum Führen des Filterelements (20) angeordnet ist oder
- **dass** das Filterelement (20) einen vom Fluid durchströmbaren Filterkörper (21) und einen daran angeordneten, den Filterkörper (21) bezüglich einer Filterkörperlängsachse (23) des Filterkörpers (21) radial innen abstützenden Zargenkörper (22) aufweist, wobei am Filterkörper (21) oder am Zargenkörper (22) die mit der Rastaufnahme (71) des Filtergehäuses (30) zusammenwirkende Gegenrastaufnahme (72) zum Führen des Filterelements (20) angeordnet ist, wobei die Gegenrastaufnahme (72) an einer Filterinnenfläche (25) des Filterkörpers (21) oder an einer Zargenkörperinnenfläche (26) des Zargenkörpers (22) angeordnet ist und über diese radial nach innen vorsteht.

9. Filtereinrichtung (10) nach einem der Ansprüche 4 bis 8,
**dadurch gekennzeichnet,**
- **dass** die Gegenrastaufnahme (72) wenigstens eine Einlaufschräge (76) und wenigstens eine Rastkontur-Mimik (75) aufweist, wobei die Einlaufschräge (76) mit der Rastaufnahme (71) zusammenwirkt, um das Filterelement (20) relativ zum Dom (31) oder zum Filtergehäuse (30) radial und/oder axial und/oder in einer Umfangsrichtung um die Domlängsachse (12) herum zu führen, wobei die Rastkontur-Mimik (75) mit der Rastaufnahme (71) zusammenwirkt, um das Filterelement (20) an dem Dom (31) oder dem Filtergehäuse (30) radial und/oder axial und/oder in einer Umfangsrichtung um die Domlängsachse (12) herum zu führen.

10. Filtereinrichtung (10) nach Anspruch 9,
**dadurch gekennzeichnet,**
- **dass** die Einlaufschräge (76) als eine Doppel-Einlaufschräge (76) gestaltet ist, die am Filterkörper (21) oder am Zargenkörper (22) angeordnet ist und/oder
- **dass** die Einlaufschräge (76) oder die Doppel-Einlaufschräge (76) einen Vorsprung am Filterkörper (21) oder am Zargenkörper (22) bilden und/oder
- **dass** die Einlaufschräge (76) oder die Doppel-Einlaufschräge (76) an der Rastkontur-Mimik (75) angeordnet ist, so dass diese ineinander münden oder
- **dass** am Filterkörper (21) oder am Zargenkörper (22) jeweils zwei oder mehr Einlaufschrägen (76) oder Doppel-Einlaufschrägen (76) und Rastkontur-Mimiken (75) angeordnet sind.

11. Filtereinrichtung (10) nach einem der Ansprüche 9 oder 10,
**dadurch gekennzeichnet,**
- **dass** ein oder mehrere Rastkörper (73) der Rastaufnahme (71) in die Rastkontur-Mimik (75) eingreifen, um eine Bewegung des Filterelements (20) in einer Umfangsrichtung um die Domlängsachse (12) herum zu sperren, so dass das Filterelement (20) zu einer vorgegebenen oder vorgebaren Betriebsstellung (20a) führbar ist, wobei die Rastkontur-Mimik (75) komplementär zu den Rastkörpern (73) gestaltete Fortsatzkörper (62a) der Fortsatz-Anordnung (62) zum Betätigen des Ventilglieds (40) in der Betriebsstellung (20a) umfasst.

12. Filtereinrichtung (10) nach einem der vorhergehenden Ansprüche,
**dadurch gekennzeichnet,**
- **dass** der Dom (31) einen eine Domlängsachse (12) definierenden Domkörper (33) aufweist,
- wobei der Domkörper (33) eine Dom-Ausnehmung (35) aufweist, die von einer Domkörperwandung (34) des Domkörpers (33) axial und/oder radial bezüglich einer Domlängsachse (12) des Domkörpers (33) begrenzt und von einem Fluid durchströmbar ist, und
- wobei das Ventilglied (40) innerhalb der Dom-Ausnehmung (35) angeordnet und im Rahmen der Ventilgliedbewegung (42) in Richtung der Ventilgliedlängsachse (41) bewegbar ist und/oder
- wobei der Dom (31) die von dem Ventilglied (40) wahlweise verschließbare oder freigebare Überströmanordnung (32) und eine Zuströmöffnung (11) aufweist oder
- **dass** das Ventilglied (40) an einer Innenmantelfläche (36) der Dom-Ausnehmung (35) rundum berührend anliegt, so dass das Ventilglied (40) geführt von der Innenmantelfläche (36) in der Dom-Ausnehmung (35) entlang der Ventilgliedlängsachse (41) im Rahmen der Ventilgliedbewegung (42) bewegbar ist.

13. Filtereinrichtung (10) nach Anspruch 12,
**dadurch gekennzeichnet,**
- **dass** der Domkörper (33) eine mit der Dom-Ausnehmung (35) fluidisch verbundene Überströmanordnung (32) und eine ebenso mit der Dom-Ausnehmung (35) fluidisch verbundene Zuströmöffnung (11) aufweist,
- wobei die Überströmanordnung (32) eine Überströmausnehmung (32a) umfasst, die die Domkörperwandung (34) durchsetzt, wobei wenigstens zwei Überströmöffnungen (32c, 32d) der Überströmausnehmung (32a) vorgesehen sind, von der jeweils eine in die Dom-Ausnehmung (35) und die jeweils andere an einer Außenmantelfläche (37) des Domkörpers (33) münden, wobei die Überströmanordnung (32a) die Domkörperwandung (34) bezüglich der Domlängsachse (12) radial durchsetzt oder
- **dass** am Domkörper (33) zwei zueinander diametral angeordnete Überströmausnehmung (32a, 32b) vorgesehen sind, die jeweils die Domkörperwandung (34) durchsetzen.

14. Filterelement (20) zum Reinigen eines Fluides zur Verwendung bei einer Filtereinrichtung (10) gemäß einem der Ansprüche 1 bis 13,
- mit einem durchströmbaren Filterkörper (21) zum Reinigen des Fluides,
- mit wenigstens einem als Innenzarge ausgebildeten am Filterkörper (21) angeordneten und den Filterkörper (21) radial von innen her abstützenden Zargenkörper (22),
- wobei das Filterkörper-Zargenkörper-Bauteil (21, 22) in einer Betriebsstellung (20a) auf das Filtergehäuse (30) aufsteckbar ist, so dass das Ventilglied (40) in eine der Offenstellung (45, 46) bewegbar ist und dass das Filterkörper-Zargenkörper-Bauteil (21, 22) in einer Wechselstellung (20b) vom Filtergehäuse (30) entfernbar ist,
- wobei am Filterelement (20) eine Gegenrastaufnahme (72) angeordnet ist, die mit einer am Filtergehäuse (30) angeordneten Rastaufnahme (71) zusammenwirkt, um das Filterelement (20) relativ zum Filtergehäuse (30) zu führen und auszurichten,
- wobei die Gegenrastaufnahme (72) wenigstens eine Einlaufschräge (76) oder eine Doppel-Einlaufschräge (76) und wenigstens eine Rastkontur-Mimik (75) umfasst,
- wobei die Rastkontur-Mimik (75) eine Fortsatz-Anordnung (62) aufweist, wobei die Fortsatz-Anordnung (62) mit einer Öffner-Anordnung (61) eines am Filtergehäuse (30) gleitverschlieblich angeordneten Ventilglieds (40) zusammenwirkt, um das Ventilglied (40) in eine Betriebsstellung (20a) zu bringen,
**dadurch gekennzeichnet,**
- **dass** die Fortsatz-Anordnung (62) einen stiftartigen Fortsatzkörper (62a) aufweist, um den herum die Fortsatz-Anordnung (62) zwei taschenartige Vertiefungen bildet.

## Claims

1. Filter device (10) for purifying a fluid,
- having a filter element (20) which can be flowed through by fluid,
- having a filter housing (30) for receiving the filter element (20),
- having a valve member (40) arranged displaceably in the filter housing (30) and defining a valve member longitudinal axis (41), which valve member (40) can be moved to and from in the context of a valve member movement (42) between a closed position (43) closing an overflow arrangement (32) of the filter housing (30), in which the fluid cannot flow through the filter element (20), and at least one open position (45, 46) releasing the overflow arrangement (32), in which the filter element (20) is in an operating position (20a) and is flowed through by fluid, wherein the filter housing (30) comprises a mandrel (31) for receiving the filter element (20) and the valve member (40), wherein the filter element (20) in the operating position (20a) is set on the mandrel (31),
- having an actuating arrangement (60) for actuating the valve member (40) in the context of the valve member movement (42), wherein the actuating arrangement (60) has an opener arrangement (61) arranged at the valve member (40) and an extension arrangement (62) arranged at the filter element (20) and the extension arrangement (62) interacts with the opener arrangement (61) in the operating position (20a) in order to bring the valve member (40) into an open position (45, 46),
- wherein the open arrangement (61) comprises one or several opener pins (63) arranged respectively at the valve member (40) for actuating the valve member (40), **characterized in that**
- the opener pins (63) are plonked respectively through a pin body cutout (64) and protrude laterally beyond the mandrel (31), wherein the pin body cutouts (64) are arranged at the mandrel (31) and pass through the mandrel (31) in each case transversely with regard to a mandrel longitudinal axis (12).

2. Filter device (10) according to claim 1,
**characterized in**
- **that** the opener pins (63) in the operating position (20a) are in engagement with extension bodies (62a) of the extension arrangement (62) arranged at the filter element (20), in order to actuate the valve member (40) in the context of the valve member movement (42).

3. Filter device (10) according to claim 1 or 2,
**characterized in**
- **that** at the filter element (20) and the filter housing (30), in particular at the mandrel (31), is provided a guide snap-in arrangement (70) for providing a coding function, which optionally facilitates or blocks the arrangement of a filter element (20) at the filter housing (30) and the actuation of the valve member (40).

4. Filter device (10) according to claim 3,
**characterized in**
- **that** the guide snap-in arrangement (70) has a snap-in receptacle (71) and a counter snap-in receptacle (72) which can be brought into mutual engagement in order to guide the filter element (20) and the filter housing (30) relatively to one another and to actuate the valve member (40).

5. Filter device (10) according to claim 4,
**characterized in**
- **that** the snap-in receptacle (71) is arranged at an outer jacket surface (37) of a mandrel body (33) of the mandrel (31) of the filter housing (30) accommodating the filter element (20).

6. Filter device (10) according to any of claims 4 or 5,
**characterized in**
- **that** the snap-in receptacle (71) comprises one or several snap-in bodies (73) arranged at the outer jacket surface (37) of the mandrel (31), which snap-in bodies protrude radially from the outer jacket surface with regard to a mandrel longitudinal axis (12) of the mandrel (31).

7. Filter device (10) according to any of claims 4 to 6,
**characterized in**
- **that** on the outer jacket surface (37) are arranged two snap-in body pairs (74) arranged diametrically to one another, which have respectively two snap-in bodies (73) extending parallel with regard to the mandrel longitudinal axis (12) and spaced with regard to one another in peripheral direction about the mandrel longitudinal axis (12) and/or
- **that** a pin body cutout (64) for passing through an opening pin (63) of the opener arrangement (61) is arranged between two snap-in bodies (73).

8. Filter device (10) according to any one of claims 4 to 7,
**characterized in**
- **that** the filter element (20) has a filter body (21) which can be flowed through by fluid and a frame body (22) arranged thereat, supporting the filter body (21) radially to the inside with regard to a filter body longitudinal axis (23) of the filter body (21), wherein at the filter body (21) or at the frame body (22) is arranged the counter snap-in receptacle (72), interacting with the snap-in receptacle (71) of the filter housing (30), for guiding the filter element (20) or
- **that** the filter element (20) has a filter body (21) which can be flowed through by fluid and a frame body (22) arranged thereat, supporting filter body (21) radially to the inside with regard to a filter body longitudinal axis (23) of the filter body (21), wherein at the filter body (21) or at the frame body (22) the counter snap-in receptacle (72) interacting with the snap-in receptacle (71) of the filter housing (30) is arranged for guiding the filter element (20), wherein the counter snap-in receptacle (72) is arranged at a filter inner surface (25) of the filter body (21) or a frame body inner surface (26) of the frame body (22) and protrudes radially to the inside beyond this.

9. Filter device (10) according to any of claims 4 to 8,
**characterized in**
- **that** the counter snap-in receptacle (72) has at least one run-on slope (76) and at least one snap-in contour mimic (75), wherein the run-on slope (76) interacts with the snap-in receptacle (71) in order to guide the filter element (20) relative to the mandrel (31) or to the filter housing (30) radially and/or axially and/or in a peripheral direction about the mandrel longitudinal axis (12), wherein the snap-in contour mimic (75) interacts with the snap-in receptacle (71), in order to guide the filter element (20) around the mandrel (31) or the filter housing (30) radially and/or axially and/or in a peripheral direction about the mandrel longitudinal axis (12).

10. Filter device (10) according to claim 9,
**characterized in**
- **that** the run-on slope (76) is designed as a double run-on slope (76) which is arranged at the filter body (21) or at the frame body (22) and/or
- **that** the run-on slope (76) or the double run-on slope (76) forms a protrusion at the filter body (21) or at the frame body (22) and/or
- **that** the run-on slope (76) or the double run-on slope (76) is arranged at the snap-in contour mimic (75) such that these open in one another or
- **that** at the filter body (21) or at the frame body (22) are arranged respectively two or more run-on slopes (76) or double run-on slopes (76) and snap-in contour mimics (75).

11. Filter device (10) according to any of claims 9 or 10,
**characterized in**
- **that** one or more snap-in bodies (73) of the snap-in receptacle (71) engage into the snap-in contour mimic (75) in order to block a motion of the filter element (20) in a peripheral direction around the mandrel longitudinal axis (12) such that the filter element (20) can be guided to a predetermined or predeterminable operating position (20a), wherein the snap-in contour mimic (75) comprises extension bodies (62a) of the extension arrangement (62) designed as complementary to the snap-in bodies (73) for actuating the valve member (40) in the operating position (20a).

12. Filter device (10) according to any of the preceding claims,
**characterized in**
- **that** the mandrel (31) has a mandrel body (33) defining a mandrel longitudinal axis (12),
- wherein the mandrel body (33) has a mandrel cutout (35) which is delimited by a mandrel body wall (34) of the mandrel body (33) axially and/or radially with regard to a mandrel longitudinal axis (12) of the mandrel body (33) and can be flowed through by a fluid, and
- wherein the valve member (40) is arranged within the mandrel cutout (35) and is movable in the context of the valve member movement (42) in the direction of the valve member longitudinal axis (41) and/or
- wherein the mandrel (31) has the overflow arrangement (32), which can be either closed or released by the valve member (40), and an inflow opening (11) or
- **that** the valve member (40) rests, with all-round contact, on an inner jacket surface (36) of the mandrel cutout (35), such that the valve member (40) guided by the inner jacket surface (36) is movable in the mandrel cutout (35) along the valve member longitudinal axis (41) in the context of the valve member motion (42).

13. Filter device (10) according to claim 12,
**characterized in**
- **that** the mandrel body (33) has an overflow arrangement (32) fluidically connected to the mandrel cutout (35) and an inflow opening (11) also fluidically connected to the mandrel cutout (35),
- wherein the overflow arrangement (32) comprises an overflow cutout (32a), which penetrates the mandrel body wall (34), wherein at least two overflow openings (32c, 32d) of the overflow cutout (32a) are provided, of which respectively one opens into the mandrel cutout (35) and the respectively other opens at an outer jacket surface (37) of the mandrel body (33), wherein the overflow arrangement (32a) penetrates the mandrel body wall (34) radially with regard to the mandrel longitudinal axis (12) or
- **that** at the mandrel body (33) are provided two overflow cutouts (32a, 32b) arranged diametrically to one another, which each penetrates the mandrel body wall (34).

14. Filter element (20) for purifying a fluid for use in a filter device (10) according to any of claims 1 to 13,
- having a through-flowable filter body (21) for purifying the fluid,
- having at least one frame body (22) formed as an inner frame, arranged at the filter body (21) and supporting the filter body (21) radially from the interior,
- wherein the filter-body-frame-body-component (21, 22) can be plugged in an operating position (20a) onto the filter housing (30) such that the valve member (40) is movable into one of the open positions (45, 46) and that the filter-body-frame-body-component (21, 22) can be removed from the filter housing (30) in an exchange position (20b),
- wherein at the filter element (20) is arranged a counter snap-in receptacle (72) which interacts with a snap-in receptacle (71) arranged at the filter housing (30), in order to guide and align the filter element (20) relative to the filter housing (30),
- wherein the counter snap-in receptacle (72) comprises at least one run-on slope (76) or a double run-on slope (76) and at least one snap-in contour mimic (75),
- wherein the snap-in contour mimic (75) has an extension arrangement (62), wherein the extension arrangement (62) interacts with an open arrangement (61) of a valve member (40) arranged at the filter housing (30) so as to be slidingly displaceable, in order to bring the valve member (40) into an operating position (20a), **characterized in**
- **that** the extension arrangement (62) has a pin-like extension body (62a), about which the extension arrangement (62) forms two pocket like indentations.

## Revendications

1. Appareil de filtration (10) pour la purification d'un fluide,
- avec un élément de filtre (20) pouvant être traversé par un fluide,
- avec un boîtier de filtre (30) destiné à recevoir l'élément de filtre (20),
- avec un organe de soupape (40) agencé de manière déplaçable dans le boîtier de filtre (30) et définissant un axe longitudinal d'organe de soupape (41), organe de soupape (40) qui peut, dans le cadre d'un mouvement d'organe de soupape (42), aller et venir d'une position de fermeture (43) fermant un agencement de débordement (32) du boîtier de filtre (30), dans laquelle un fluide ne peut pas s'écouler à travers l'élément de filtre (20), et au moins une position ouverte (45, 46) libérant l'agencement de débordement (32), dans laquelle l'élément de filtre (20) est dans une position de fonctionnement (20a) et est traversé par du fluide, dans lequel le boîtier de filtre (30) comprend un dôme (31) pour recevoir l'élément de filtre (20) et l'organe de soupape (40), dans lequel l'élément de filtre (20) est placé sur le dôme (31) dans la position de fonctionnement (20a),
- avec un dispositif d'actionnement (60) pour actionner l'organe de soupape (40) dans le cadre du mouvement d'organe de soupape (42), dans lequel le dispositif d'actionnement (60) présente un agencement d'ouverture (61) agencé au niveau de l'organe de soupape (40) et un agencement d'extension (62) agencé au niveau de l'élément de filtre (20), et l'agencement d'extension (62) coopère avec l'agencement d'ouverture (61) dans la position de fonctionnement (20a) afin d'amener l'organe de soupape (40) dans une position d'ouverture (45, 46),
- dans lequel l'agencement d'ouverture (61) comprend une ou plusieurs broches d'ouverture (63) agencées respectivement au niveau de l'organe de soupape (40) pour actionner l'organe de soupape (40), **caractérisé en ce que**
- les broches d'ouverture (63) sont enfichées respectivement à travers un évidement de corps de broche (64) et font saillie latéralement au-delà du dôme (31), dans lequel les évidements de corps de broche (64) sont agencés au niveau du dôme (31) et traversent respectivement le dôme (31) transversalement par rapport à un axe longitudinal de dôme (12).

2. Appareil de filtration (10) selon la revendication 1,
**caractérisé en ce que**
- les broches d'ouverture (63) sont en prise, dans la position de fonctionnement (20a), avec des corps d'extension (62a) de l'agencement d'extension (62) agencés au niveau de l'élément de filtre (20), afin d'actionner l'organe de soupape (40) dans le cadre du mouvement d'organe de soupape (42).

3. Appareil de filtration (10) selon l'une quelconque des revendications 1 ou 2,
**caractérisé en ce que**
- il est prévu au niveau de l'élément de filtre (20) et du boîtier de filtre (30), en particulier au niveau du dôme (31), un agencement de guidage et d'encliquetage (70) pour fournir une fonction de codage qui permet ou bloque au choix la mise en place d'un élément de filtre (20) au niveau du boîtier de filtre (30) et l'actionnement de l'organe de soupape (40).

4. Appareil de filtration (10) selon la revendication 3,
**caractérisé en ce que**
- l'agencement de guidage et d'encliquetage (70) présente un logement d'encliquetage (71) et un contre-logement d'encliquetage (72) qui peuvent être amenés en prise mutuelle pour guider l'élément de filtre (20) et le boîtier de filtre (30) l'un par rapport à l'autre et pour actionner l'organe de soupape (40).

5. Appareil de filtration (10) selon la revendication 4,
**caractérisé en ce que**
- le logement d'encliquetage (71) est agencé au niveau d'une surface d'enveloppe extérieure (37) d'un corps de dôme (33) du dôme (31) du boîtier de filtre (30) recevant l'élément de filtre (20).

6. Appareil de filtration (10) selon l'une quelconque des revendications 4 ou 5,
**caractérisé en ce que**
- le logement d'encliquetage (71) comprend un ou plusieurs corps d'encliquetage (73) agencés au niveau de la surface d'enveloppe extérieure (37) du dôme (31), corps d'encliquetage qui font saillie radialement de la surface d'enveloppe extérieure (37) par rapport à un axe longitudinal de dôme (12) du dôme (31).

7. Appareil de filtration (10) selon l'une quelconque des revendications 4 à 6,
**caractérisé en ce que**
- deux paires de corps d'encliquetage (74) agencées diamétralement l'une par rapport à l'autre sont agencées au niveau de la surface d'enveloppe extérieure (37), paires qui présentent chacune deux corps d'encliquetage (73) espacés l'un de l'autre dans une direction circonférentielle autour de l'axe longitudinal de dôme (12) et s'étendant parallèlement à l'axe longitudinal de dôme (12), et/ou
- un évidement de corps de broche (64) pour le passage d'une broche d'ouverture (63) de l'agencement d'ouverture (61) est agencé entre deux corps d'encliquetage (73).

8. Appareil de filtration (10) selon l'une quelconque des revendications 4 à 7,
**caractérisé en ce que**
- l'élément de filtre (20) présente un corps de filtre (21) pouvant être traversé par un fluide et un corps de châssis (22) agencé à ce niveau et soutenant le corps de filtre (21) radialement vers l'intérieur par rapport à un axe longitudinal de corps de filtre (23) du corps de filtre (21), dans lequel le contre-logement d'encliquetage (72) coopérant avec le logement d'encliquetage (71) du boîtier de filtre (30) est agencé au niveau du corps de filtre (21) ou du corps de châssis (22) pour guider l'élément de filtre (20) ou
- l'élément de filtre (20) présente un corps de filtre (21) pouvant être traversé par un fluide et un corps de châssis (22) agencé à ce niveau et soutenant le corps de filtre (21) radialement vers l'intérieur par rapport à un axe longitudinal de corps de filtre (23) du corps de filtre (21), dans lequel le contre-logement d'encliquetage (72) coopérant avec le logement d'encliquetage (71) du boîtier de filtre (30) est agencé au niveau du corps de filtre (21) ou du corps de châssis (22) pour guider l'élément de filtre (20), dans lequel le contre-logement d'encliquetage (72) est agencé au niveau d'une surface intérieure de filtre (25) du corps de filtre (21) ou au niveau d'une surface intérieure de châssis (26) du corps de châssis (22) et fait saillie radialement vers l'intérieur au-delà de celles-ci.

9. Appareil de filtration (10) selon l'une quelconque des revendications 4 à 8,
**caractérisé en ce que**
- le contre-logement d'encliquetage (72) présente au moins un chanfrein d'entrée (76) et au moins une mimique de contour d'encliquetage (75), dans lequel le chanfrein d'entrée (76) coopère avec le logement d'encliquetage (71) pour guider l'élément de filtre (20) par rapport au dôme (31) ou au boîtier de filtre (30) radialement et/ou axialement et/ou dans une direction périphérique autour de l'axe longitudinal de dôme (12), dans lequel la mimique de contour d'encliquetage (75) coopère avec le logement d'encliquetage (71) pour guider l'élément de filtre (20) au niveau du dôme (31) ou du boîtier de filtre (30) radialement et/ou axialement et/ou dans une direction circonférentielle autour de l'axe longitudinal de dôme (12).

10. Appareil de filtration (10) selon la revendication 9,
**caractérisé en ce que**
- le chanfrein d'entrée (76) est conçu comme un double chanfrein d'entrée (76), qui est agencé au niveau du corps de filtre (21) ou du corps de châssis (22) et/ou
- **en ce que** le chanfrein d'entrée (76) ou le double chanfrein d'entrée (76) forme une saillie au niveau du corps de filtre (21) ou du corps de châssis (22) et/ou
- le chanfrein d'entrée (76) ou le double chanfrein d'entrée (76) est agencé au niveau de la mimique de contour d'encliquetage (75), de sorte que ceux-ci débouchent l'un dans l'autre, ou
- **en ce que** deux ou plusieurs chanfreins d'entrée (76) ou doubles chanfreins d'entrée (76) et mimiques de contour d'encliquetage (75) sont respectivement agencés au niveau du corps de filtre (21) ou du corps de châssis (22).

11. Appareil de filtration (10) selon l'une quelconque des revendications 9 ou 10,
**caractérisé en ce que**
- un ou plusieurs corps d'encliquetage (73) du logement d'encliquetage (71) s'engagent dans la mimique de contour d'encliquetage (75) pour bloquer un mouvement de l'élément de filtre (20) dans une direction circonférentielle autour de l'axe longitudinal de dôme (12), de sorte que l'élément de filtre (20) puisse être guidé vers une position de fonctionnement (20a) prédéterminée ou prédéterminable, dans lequel la mimique de contour d'encliquetage (75) comprend des corps d'extension (62a) de l'agencement d'extension (62) conçus de manière complémentaire aux corps d'encliquetage (73) pour actionner l'organe de soupape (40) dans la position de fonctionnement (20a).

12. Appareil de filtration (10) selon l'une quelconque des revendications précédentes,
**caractérisé en ce que**
- le dôme (31) présente un corps de dôme (33) définissant un axe longitudinal de dôme (12),
- dans lequel le corps de dôme (33) présente un évidement de dôme (35) qui est délimité par une paroi de corps de dôme (34) du corps de dôme (33) axialement et/ou radialement par rapport à un axe longitudinal de dôme (12) du corps de dôme (33) et qui peut être traversé par un fluide, et
- dans lequel l'organe de soupape (40) est agencé à l'intérieur de l'évidement de dôme (35) et peut être déplacé dans le cadre du mouvement d'organe de soupape (42) en direction de l'axe longitudinal d'organe de soupape (41) et/ou
- dans lequel le dôme 31) présente l'agencement de débordement (32) pouvant être, au choix, fermé ou libéré par l'organe de soupape (40) et une ouverture d'arrivée (11) ou - **en ce que** l'organe de soupape (40) s'applique en contact tout autour d'une surface d'enveloppe intérieure (36) de l'évidement de dôme (35), de sorte que l'organe de soupape (40) guidé par la surface d'enveloppe intérieure (36) puisse être déplacé dans l'évidement de dôme (35) le long de l'axe longitudinal d'organe de soupape (41) dans le cadre du mouvement d'organe de soupape (42).

13. Appareil de filtration (10) selon la revendication 12,
**caractérisé en ce que**
- le corps de dôme (33) présente un agencement de débordement (32) relié fluidiquement à l'évidement de dôme (35) et une ouverture d'arrivée (11) également reliée fluidiquement à l'évidement de dôme (35),
- dans lequel l'agencement de débordement (32) comprend un évidement de débordement (32a) qui traverse la paroi (34) du corps de dôme, dans lequel il est prévu au moins deux ouvertures de débordement (32c, 32d) de l'évidement de débordement (32a), dont l'une respective débouche dans l'évidement de dôme (35) et l'autre respective débouche au niveau d'une surface d'enveloppe extérieure (37) du corps de dôme (33), dans lequel l'agencement de débordement (32a) traverse radialement la paroi de corps de dôme (34) par rapport à l'axe longitudinal de dôme (12) ou
- il est prévu au niveau du corps de dôme (33) deux évidements de débordement (32a, 32b) agencés diamétralement l'un par rapport à l'autre, qui traversent respectivement la paroi du corps de dôme (34).

14. Élément de filtre (20) pour la purification d'un fluide, destiné à être utilisé dans un appareil de filtration (10) selon l'une quelconque des revendications 1 à 13,
- avec un corps de filtre (21) pouvant être traversé pour la purification du fluide,
- avec au moins un corps de châssis (22) réalisé sous forme de châssis intérieur, agencé au niveau du corps de filtre (21) et soutenant le corps de filtre (21) radialement depuis l'intérieur,
- dans lequel le composant de corps de filtre et de corps de châssis (21, 22) peut être enfiché au niveau du boîtier de filtre (30) dans une position de fonctionnement (20a), de sorte que l'organe de soupape (40) puisse être déplacé dans l'une des positions d'ouverture (45, 46) et en ce que le composant de corps de filtre et de corps de châssis (21, 22) peut être retiré du boîtier de filtre (30) dans une position d'échange (20b),
- dans lequel un contre-logement d'encliquetage (72) est agencé au niveau de l'élément de filtre (20), lequel contre-logement d'encliquetage coopère avec un logement d'encliquetage (71) agencé au nivau du boîtier de filtre (30), afin de guider et d'orienter l'élément de filtre (20) par rapport au boîtier de filtre (30),
- dans lequel le contre-logement d'encliquetage (72) comprend au moins un chanfrein d'entrée (76) ou un double chanfrein d'entrée (76) et au moins une mimique de contour d'encliquetage (75),
- dans lequel la mimique de contour d'encliquetage (75) présente un agencement d'extension (62), dans lequel l'agencement d'extension (62) coopère avec un agencement d'ouverture (61) d'un organe de soupape (40) agencé de manière à pouvoir coulisser au niveau du boîtier de filtre (30), afin d'amener l'organe de soupape (40) dans une position de fonctionnement (20a), **caractérisé en ce que**
- l'agencement d'extension (62) présente un corps d'extension (62a) en forme de broche, autour duquel l'agencement d'extension (62) forme deux cavités en forme de poche.
